# EUROPÄISCHE PATENTSCHRIFT

(11) **EP 0 379 469 B1**
(45) Veröffentlichungstag und Bekanntmachung des Hinweises auf die Patenterteilung: **25.08.1993**
(21) Anmeldenummer: 90810034.0
(22) Anmeldetag: 17.01.1990
(51) Int. Cl.: F24H 8/00, F24H 1/52, F24H 1/44

(54) **Heizungsanlage**
Heating installation
Installation de chauffage

(30) Priorität: 17.01.1989 CH 134/89
(43) Veröffentlichungstag der Anmeldung: 25.07.1990
(73) Patentinhaber: Gelewski, Winfried, CH-9403 Goldach (CH)
(72) Erfinder: Gelewski, Winfried, CH-9403 Goldach (CH)
(74) Vertreter: Kulhavy, Sava, Dipl.-Ing.

(56) Entgegenhaltungen:
- EP-A- 0 114 980
- EP-A- 0 190 616
- EP-A- 0 195 383
- DE-A- 2 842 215
- NL-A- 6 504 669
- NL-A- 8 100 641
- CHAUD-FROID-PLOMBERIE, Band 41, Nr. 486, 9. November 1987, Seiten 135-141; F. CROQUELOIS: "110% PCI! Condenez encore plus avec la pompe à vapeur"

## Beschreibung

Die vorliegende Erfindung betrifft eine Heizungsanlage mit Anschlüssen für einen Heizkreislauf, mit einem Erhitzer, welcher neben einer Brennvorrichtung auch einen Wärmetauscher aufweist, mit einer Einrichtung zum Abkühlen der aus dem Erhitzer strömenden Abgase, mit einem Sauggebläse, welches dem Rauchabzug der Heizungsanlage vorgeschaltet ist, und mit einem zweiten Wärmetauscher, welcher zwischen dem Erhitzer und der Abkühleinrichtung angeordnet ist, wobei dieser zweite Wärmetauscher mittels Anschlusstücke an den Erhitzer einerseits und an die Abkühleinrichtung andererseits angeschlossen ist.

Eine Anlage dieser Gattung ist in der NL-A-8100641 offenbart. Bei dieser Heizungsanlage verläuft die Längsachse des Erhitzers, welcher im wesentlichen zylinderförmig ist, vertikal. Im Mantel des Erhitzers sind Hohlräume ausgeführt, in welchen sich das zu erhitzende Wasser befindet. Rauchgasmässig ist ein zweiter Wärmetauscher diesem Erhitzer nachgeschaltet. Diesem ist dann eine Abkühleinrichtung nachgeschaltet. Diese Teile der vorbekannten Heizungsanlage sind übereinander angeordnet. Die Abmessungen einer solchen Heizungsanlage, vor allem die Höhe derselben, sind ganz beträchtlich. Die räumlichen Verhältnisse in einem Heizraum sind eher beschränkt und deswegen ist es oft nicht möglich, die bekannte Heizungsanlage der genannten Gattung in solchen Räumen anzuordnen.

Die Aufgabe der vorliegenden Erfindung besteht darin, zumindest die genannten Nachteile der vorbekannten Heizungsanlage zu beseitigen.

Diese Aufgabe wird bei der Heizungsanlage der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:
Fig. 1 in einem vertikalen Schnitt die vorliegende Heizanlage,
Fig. 2 in einem vertikalen Schnitt einen zweiten Wärmetauscher der Anlage gemäss Fig. 1
Fig. 3 in einem vertikalen Schnitt eine Einrichtung zum Abkühlen von Abgasen,
Fig. 4 in einem vertikalen Schnitt einen Erhitzer und,
Fig. 5 in einer Draufsicht eine Katalysatorvorrichtung, welche ebenfalls einen der Bestandteile der vorliegenden Anlage darstellt.

Die vorliegende Heizungsanlage umfasst ein Gehäuse 1, in dem die übrigen Bestandteile dieser Anlage untergebracht sind. Das Gehäuse 1 enthält im wesentlichen nur Verkleidungsplatten 2, welche untereinander derart verbunden sind, dass das Gehäuse 1 selbsttragend ist. In den Ecken des Gehäuses 1, wo sich jeweils drei rechtwinklig zueinander stehende Verkleidungsplatten 2 treffen, werden die Eckpartien dieser Platten 2 mit Hilfe von an sich bekannten Schraubelementen untereinander verbunden. Folglich erfordert dieses Gehäuse keinen Rahmen zur Abstützung der Verkleidungsplatten 2. Die Verkleidungsplatten 2 sind doppelwandig und sie weisen eine Isolationsschicht auf, deren Dicke vorteilhaft 2,5 mm beträgt.

Das Anlagegehäuse 1 weist einen vorderen Abschnitt 3 und einen rückwärtigen Abschnitt 4 auf, wobei die Oberplatte 2 des rückwärtigen Abschnittes 4 höher liegt als die Oberplatte 2 des Vorderabschnittes 3. Dieser Höhenunterschied ist zumindest so gross wie die Höhe des Gehäuses eines Steuergerätes 5, welches zur Steuerung des Betriebes dieser Anlage erforderlich ist. Das Steuergerät 5 liegt auf der Oberplatte 2 des Vorderabschnittes 3 auf und die Rückseite desselben ist einer niedrigen, vorderen Seitenwand 6 des rückwärtigen Abschnittes 4 des Gehäuses 1 zugeordnet. Die Rückwand des Steuergerätes 5 und die Vorderseite der Vorderwand 6 des Gehäuseabschnittes 4 sind mit mehrpoligen Steckverbindungen (nicht dargestellt) versehen, über welche das Steuergerät 5 an die übrigen elektrischen Kreise der Heizungsanlage elektrisch angeschlossen ist.

Die Heizungsanlage umfasst ferner einen Erhitzer 10, welcher sich im oberen Bereich des Vorderabschnittes 3 des Gehäuses 1 befindet. Unter dem Erhitzer 10 und ebenfalls im Vorderabschnitt 3 ist ein Wärmetauscher 11 angeordnet, welcher dem Erhitzer 10 nachgeschaltet ist. An den Wärmetauscher 11 ist eine Einrichtung 12 zu einem weiteren Abkühlen der vom Erhitzer 10 herkommenden Abgase angeschlossen. Diese Abkühleinrichtung 12 befindet sich hinter dem Erhitzer 10 und dem Wärmetauscher 11, und zwar im rückwärtigen Abschnitt 4 des Anlagegehäuses 1. Im Austrittsbereich der Abkühleinrichtung 12 befindet sich ein Sauggebläse 13, welches das Abgas aus dem Erhitzer 10 durch den Wärmetauscher 11 sowie durch die Abkühleinrichtung 12 saugt. Der Abluftventilator 13 leitet das Abgas dann in ein Rohr 14, durch welches es ins Freie entweichen kann. Dieses Rohr 14 ist vorteilhaft ein aus einem säurebeständigen und flexiblen Kunststoff hergestelltes Rohr und dieses Rohr kann in einem stillgelegten Kamin eingezogen sein.

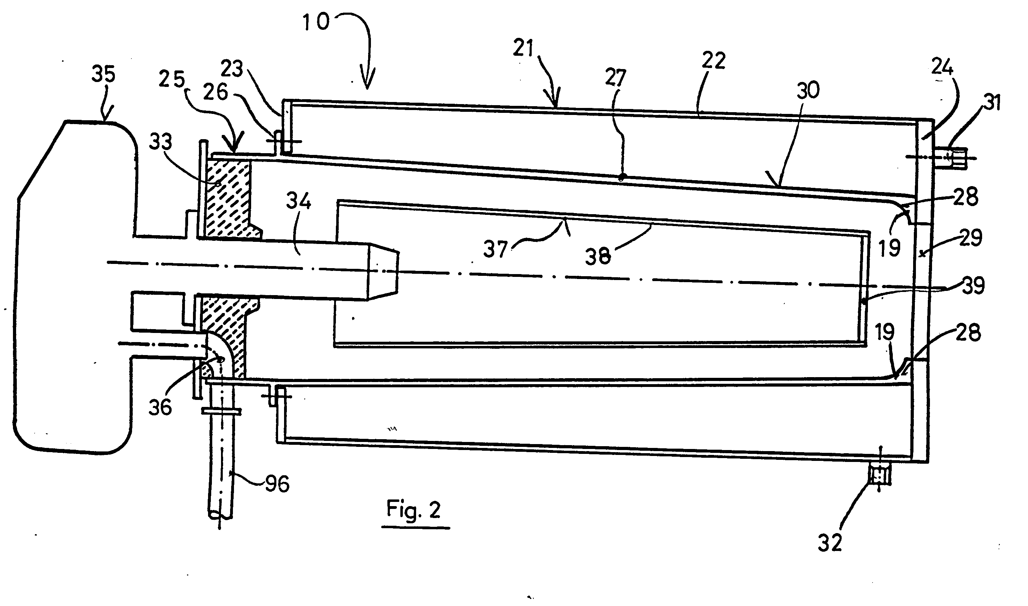

Der Erhitzer 10 (Fig. 2) weist einen Behälter 21 auf, welcher einen länglichen und im wesentlichen zylinderförmigen Mantel 22 enthält. Die Längsachse dieses Behälters 21 verläuft praktisch horizontal und praktisch rechtwinklig zur Vorderwand 2 des Gehäuse-Vorderabschnittes 3. Die Stirnwände 23 und 24 des Behälters 21, welche sich an den Behältermantel 22 vorne und hinten anschliessen, haben die Form von flachen Ringen, wobei der äussere Rand des jeweiligen Ringes 23 bzw. 24 an die entsprechende Randpartie des Mantels 22 flüssigkeitsdicht angeschlossen ist. In der mittigen Oeffnung der vorderen Stirnwand 23 ist eine Brennvorrichtung 25 eingesetzt, wobei diese Brennvorrichtung 25 mit Hilfe eines Flansches 26 und mit Hilfe von Schrauben an der vorderen Stirnwand 23 des Behälters 21 flüssigkeitsdicht befestigt ist.

Die Brennvorrichtung 25 umfasst einen Wärmetauscher 30, dessen Grundkörper 27 im wesentlichen rohrförmig ist. Die Innenseite dieses Rohres 27 ist mit Rippen (nicht dargestellt) versehen, welche von der Innenseite des Rohres 27 abstehen, sich in der Längsrichtung des Rohres 27 erstrecken und welche sich in Abständen voneinander befinden. Von der Aussenseite des Grundkörpers 27 steht der Flansch 26 ab, und dieser befindet sich in der Nähe der vorderen Endpartie dieses Körpers 27. Der Querschnitt bzw. Durchmesser des Rippenrohres 27 vermindert sich mit dem zunehmenden Abstand vom mit dem Flansch 26 versehenen Ende desselben, so dass das Rippenrohr 27 praktisch konusförmig verläuft.

Das hintere Ende des Rippenrohres 27, welches einen kleineren Durchmesser als das den Flansch 26 tragende Ende aufweist, ist mit einer umlaufenden und nach innen abstehenden Verdickung 28 versehen. Die Stirnfläche dieser verdickten Endpartie 28 liegt an der Innenseite der ringförmigen hinteren Stirnwand 24 des Wasserbehälters 21 flüssigkeitsdicht auf, und zwar derart, dass die Mündung in diesem Ende des Rohres 27 mit der Oeffnung 29 in der hinteren Behälterwand 24 fluchtet. Der Mantel 22, die Stirnwände 23 und 24 sowie das Rohr 27 bilden die Wände des Behälters 21, in dem das Heizungswasser erhitzt wird.

Der Behälter 21 ist mit einem Vorlaufstutzen 31 versehen, an den die Vorlaufleitung eines Heizkreislaufes (nicht dargestellt) angeschlossen ist. Der Vorlaufstutzen 31 ist im dargestellten Beispiel an der hinteren Stirnwand 24 des Behälters 21 ausgeführt. Der Mantel 22 des Behälters 21 ist im unteren Bereich desselben mit einem weiteren Stutzen 32 versehen, durch welchen Wasser vom bereits erwähnten, zweiten und dem Erhitzer 10 rauchgasmässig nachgeschalteten Wärmetauscher 11 in den Erhitzer 10 gelangt. Bei der vorliegenden Heizungsanlage ist keine Vermischung von Rücklaufwasser mit einem Teil von Vorlaufwasser vorgesehen.

In der vorderen, grösseren Mündung des Rohrwärmetauschers 30 ist eine Frontplatte 33 aus einem hitzebeständigen Material eingesetzt, welche die Form eines flachen Ringes aufweist und welche vorteilhaft aus einem keramischen Material ist. In der mittigen Oeffnung dieser Frontplatte 33 ist die Düse 34 des Brenners 35 eingestezt. Ueber einen Stutzen 36, welcher sich durch die Frontplatte 33 bis in den Brenner 35 erstreckt, gelangt Frischluft zum Brenner 35. Die Düse 34 ist aus einem keramischen Material und sie ist derart ausgeführt, dass die Brennerflamme eine Blauflamme ist.

Die freie Endpartie der Brennerdüse 34 liegt in der Anfangspartie eines Flammentopfes 37. Dieser Topf 37 weist einen Mantel 38 auf, welcher ähnlich wie der Grundkörper 27 des ersten Wärmetauschers 30 geformt ist. Die Mündung des Mantels 38, in der die Brennerdüse 34 liegt, weist einen grösseren Durchmesser auf als das gegenüberliegende Ende dieses Mantels 38. Diese grössere Mündung des Topfmantels 38 ist sonst offen bzw. frei. In der anderen Endpartie des Flammentopfmantels 38 ist eine Abschlussplatte 39 befestigt. Diese Platte 39 kann aus einem keramischen Material sein, welches unter der Einwirkung der Flamme glühen kann. Der Mantel 38 des Flammentopfes 37 kann ebenfalls aus einem keramischen Material sein oder er kann auch aus Chromstahl sein.

Der Flammentopf 37 ist praktisch koaxial zum Wasserbehälter 21 angeordnet. Die Konizität des Flammentopfmantels 38 und des Rohrwärmetauschers 30 sind praktisch gleich, so dass die Breite bzw. Höhe des ringförmigen Raumes, welcher zwischen den Manteln 27 und 38 vorhanden ist, überall gleich ist. Die Abschlussplatte 39 befindet sich im Inneren des Grundkörpers 27 und zwar in einem Abstand von der mittigen Oeffnung 29 in der hinteren Stirnwand 24 des Wasserbehälters 21. Die Grösse des Spaltes, welcher zwischen der äusseren Kante der Abschlussplatte 39 und der Innenwand der Verdickung 28 vorhanden ist, gleicht praktisch der Breite bzw. Höhe des Spaltes zwischen den konusförmigen Manteln 27 und 37. Der innere Durchmesser der verdickten Endpartie 28 des Rippenrohrwärmetauschers 27 gleicht dem Durchmesser der Oeffnung 29 in der ringförmigen hinteren Stirnwand 24 des Behälters 21. Der nach innen gekrümmte Abschnitt 19 der Innenwand der Verdickung 28 wirkt sich bei der Einführung von Abgas in die Ringöffnung 29 der hinteren Behälterstirnwand 24 vorteilhaft aus.

Während des Betriebes dieser Heizungsanlage erfolgt die Verbrennung des Brennstoffes im Flammentopf 38, wobei die Flamme gegen die Abschlussplatte 39 dieses gerichtet ist. Durch den Glüheffekt dieser Platte 39 werden die Restpartikeln nachverbrannt. Der Strom des Abgases wird durch die Platte 39 um 180 Grad umgelenkt, so dass dieser Strom den Flammentopf 38 durch die vordere offene Mündung desselben verlässt, in der sich die Brennerdüse 34 befindet. Hier tritt das Abgass in das vordere Ende des Wärmetauschers 30 ein. Das heisse Abgas strömt dann vom vorderen Ende des gerippten Grundkörpers 27 des Wärmetauschers 30 zum hinteren Ende desselben, wo es diesen durch die Oeffnung 29 verlässt. Während das Abgas am Grundkörper 27 des Wärmetauschers 30 vorbeiströmt, gibt es seine Wärmeenergie an diesen ab, was eine Erhitzung des mit der Aussenseite dieses Grundkörpers 27 in Kontakt stehenden Wassers zur Folge hat. Zwischen den konussförmigen Manteln 27 und 38 strömen somit nur noch heisse Rauchgase, welche den Erhitzer 10 durch die Oeffnung 29 in der hinteren Stirnwand 24 des Erhitzerbehälters 21 verlassen.

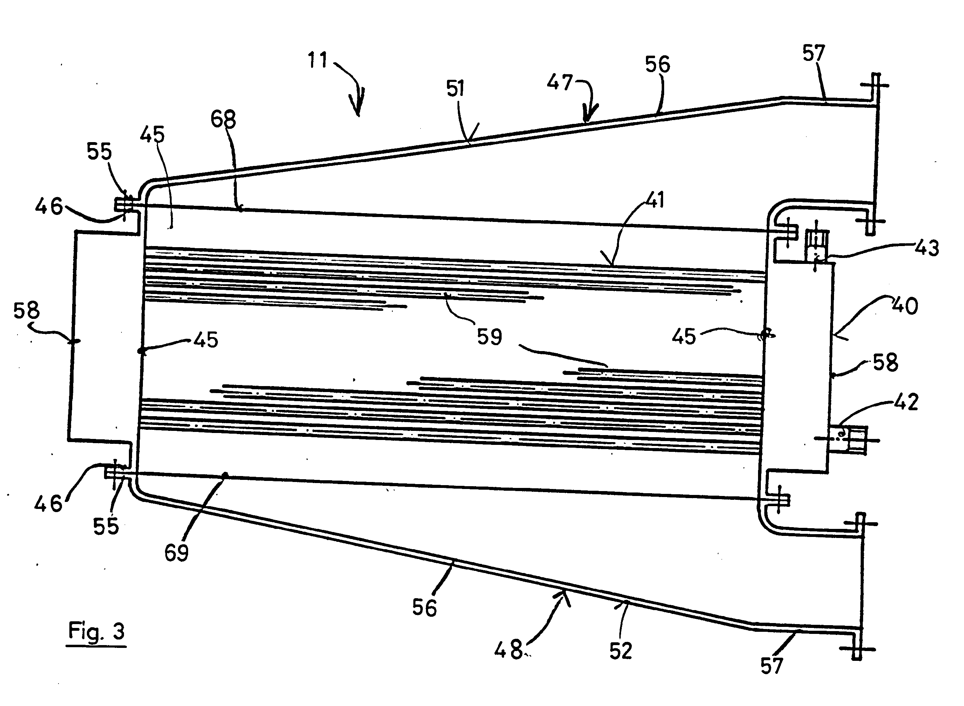

Der zweite Wärmetauscher 11 (Fig. 3), welcher dem Erhitzer 10 rauchgasmässig nachgeschaltet ist, weist einen Behälter 40 auf, in dem sich ein Wärmetauschkörper 41 befindet. Das Gehäuse 40 dieses zweiten Wärmetauschers 11 hat einen im wesentlichen viereckigen Grundriss und sie umfasst vier Seitenwände 45, deren Kanten untereinander verbunden sind. Oben und unten weist dieses Gehäuse 40 je eine Oeffnung 68 bzw. 69 auf.

Der Wärmetauschkörper 41 enthält parallel zueinander angeordnete und geradlinig verlaufende Röhren 59, welche sich von einer der Seitenwände 45 des Gehäuses 40 zur gegenüberliegenden Seitenwand 45 desselben erstrecken. Vorteilhaft erstrecken sich die Röhren 59 zwischen jenen Seitenwänden 45 des quaderförmigen Gehäuses 40, welche die kleinere Fläche aufweisen. Die Röhren 59 verlaufen praktisch parallel zur Ebene der jeweiligen Oeffnung 68 bzw. 69 im Gehäuse 40 und sie befinden sich in Abständen voneinander, damit das Abgas, welches durch eine der Oeffnungen 68 in das Gehäuse 40 einströmt und durch die andere Oeffnung 69 dieses wieder verlässt, zwischen den Röhren 59 strömen kann.

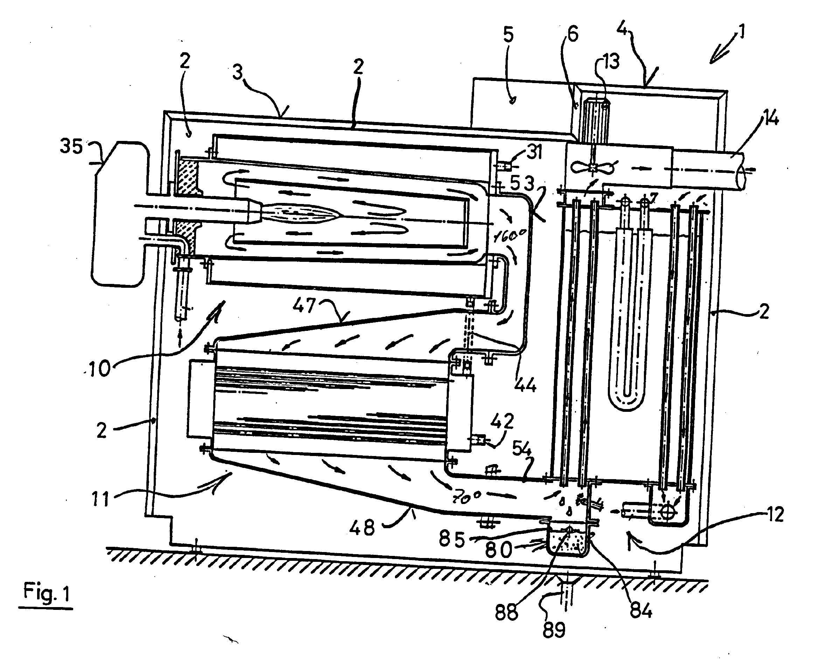

Kästen 58 sind an der Aussenseite jener Seitenwände 45 des Gehäuses 40 flüssigkeitsdicht angebracht, in den die Röhrenenden befestigt sind. In den Hohlraum, der durch die jeweilige Seitenwand 45 und den an dieser befestigten Kasten 58 begrenzt ist, münden einige der Röhren 59. Die Enden anderer Röhren 59 sind im Kasten 58 mit Hilfe von 180 Grad Bögen (nicht dargestellt) untereinander verbunden. Es ist ein Zulaufstutzen 42 vorgesehen, durch welchen das Kesselrücklaufwasser in den Wärmetauschkörper 41 eingeführt wird. Dieser Zulaufstutzen 42 ist an einem der Kasten 58 angebracht und er ist an das eine Ende der Rohrschlange 41 angeschlossen. Am anderen Ende der Schlange 41 befindet sich ein Auslaufstutzen 43, welcher ebenfalls an einem der Kästen 58 angebracht ist. Vorteilhaft ist der Auslaufstutzen 43 an demselben Kasten 58 angebracht wie der Zulaufstutzen 42. Der Auslaufstutzen 43 ist mittels eines Verbindungsrohres 44 (Fig. 1) an den Zulaufstutzen 32 am Erhitzer 10 angeschlossen. Vom Fluss des Kesselwassers her gesehen, ist der zweite Wärmetauscher 11 dem Erhitzer 10 vorgeschaltet.

Der wesentliche Vorteil dieser Anlage besteht darin, dass das Kesselrücklaufwasser eine beliebig tiefe Temperatur aufweisen kann und die Lebensdauer des Erhitzers 10 wird auch beim sehr kalten Rücklaufwasser nicht verkürzt. Dies deswegen, weil das Wasser, welches zum Erhitzer 10 zurückgelangt, wird durch den zweiten Wärmetauscher 11 auf eine ausreichend hohe Temperatur erwärmt. Das Rauchgas, welches den Erhitzer 10 verlässt, hat eine Temperatur von etwa 160 Grad Celsius. Und dieses Rauchgas, nachdem es den zweiten Wärmetauscher 11 durchströmt hat, hat eine Temperatur von etwa 70 Grad Celsius.

Die obere und die untere Randpartie des Gehäuses 40, welche die Oeffnungen 68 und 69 in diesem begrenzen, sind mit je einem Flansch 46 versehen. An solchen Randpartien des Gehäuses 40 ist jeweils ein Verbindungsstück 47 bzw. 48 angeflanscht. Das jeweilige Verbindungsstück 47 bzw. 48 umfasst eine Rauchgashaube 51 bzw. 52 sowie ein Anschlusstück 53 bzw. 54 (Fig. 1). Die Anschlusstücke 53 bzw. 54 sind an der betreffenden Rauchgashaube 51 bzw. 52 angeflanscht.

Die Rauchgashaube 51 bzw. 52 weist eine im wesentlichen flächenhafte und flache Partie 56 auf, welche die Oeffnung 68 bzw. 69 im Gehäuse 40 wie eine Haube überdeckt. Dementsprechend ist der Grundriss dieser Flachpartie 56 im wesentlichen viereckig und der dem Gehäuse 40 zugewandte Rand der Flachpartie 56 ist mit einem Flansch 55 versehen, welcher mit dem entsprechenden Flansch 46 am Wärmetauschergehäuse 40 verbunden, z.B. verschraubt ist. Die Flachpartie 56, welche den Hohlraum im Gehäuse 40 überdeckt, ist quer zu ihrer Längsrichtung gewölbt und diese gewölbte Deckwand verläuft geneigt gegenüber dem Flansch 55 der Haube 51 bzw. 52. In dem Bereich der Haube, wo der Abstand zwischen der Deckwand 56 und dem Flansch 55 derselben am grössten ist, d.h. im Bereich einer der Endpartien des länglichen Wärmetauschergehäuses 40, ist diese derart verformt, dass sie ein Rohrstück 57 bildet. An diesem Rohrstück 57 ist dann das entsprechende und ebenfalls praktisch rohrförmige Anschlusstück 53 bzw. 54 angeflanscht.

Die Rauchgaseingangshaube 51 ist über das Anschlusstück 53 an den Erhitzer 10 angeschlossen, wobei dieses Anschlusstück 53 als ein 180 Grad Krümmer ausgebildet ist. Die Rauchgasausgangshaube 52 ist über das Verbindungsstück 54 an die Abkühleinrichtung 12 angeschlossen.

Die Aussenseite der Röhren 59, die Innenseite der Seitenwände 45 des Gehäuses 40 und die Innenseite der Rauchgasausgangshaube 52 sind mit Kunststoff, vorteilhaft mit Teflon, beschichtet. Diese Kunststoffbeschichtung ermöglicht, den Säuretaupunkt im zweiten Wärmetauscher 11 zu unterschreiten, ohne dass dadurch die Lebensdauer dieses Wärmetauschers 11 verkürzt wird.

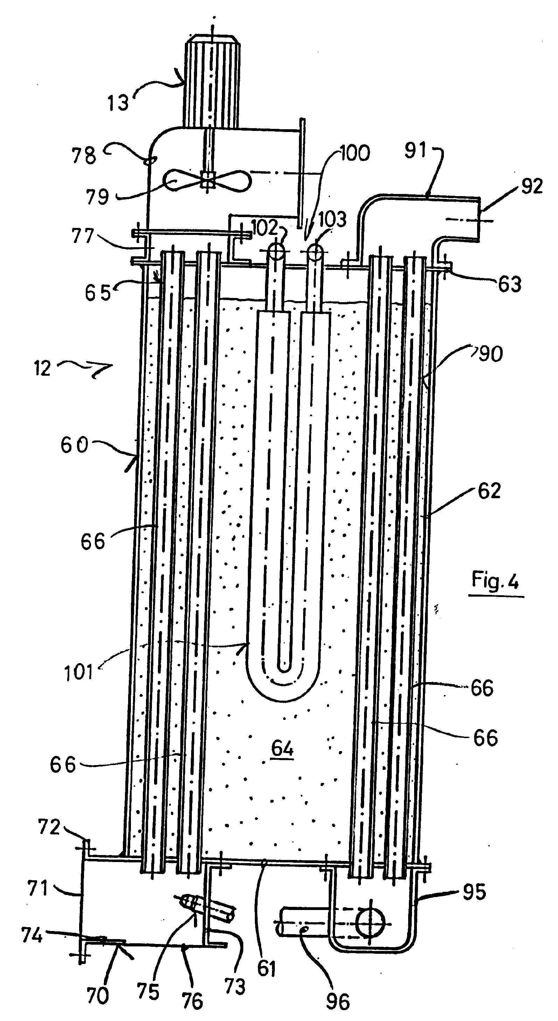

Die Abkühleinrichtung 12 (Fig. 4) der vorliegenden Heizungsanlage befindet sich im rückwärtigen Abschnitt 4 des Anlagegehäuses 1, und zwar hinter dem Erhitzer 10 und dem zweiten Wärmetauscher 11. Die Abkühleinrichtung 12 weist einen Behälter 60 auf, welcher zur Aufnahme unter anderem auch eines wärmeleitenden Fluids, vorteilhaft von Glykol enthaltendem Wasser 64, ausgebildet ist. Die Höhe dieses Behälters 60 ist grösser als die horizontalen Abmessungen desselben, wobei der Grundriss desselben kreisförmig oder eckig, vorteilhaft viereckig, sein kann. Der in Fig. 4 dargestellte Behälter 60 hat einen Boden 61 mit einer runden Aussenkontur und an diesen Boden 61 schliesst sich eine Seitenwand 62 an, welche als Mantel eines Zylinders ausgebildet ist. Der Innenraum des Behälters 60 ist oben mit Hilfe eines Deckels 63 abgeschlossen.

Zwischen dem Boden 61 und dem Deckel 63 des Behälters 60 erstreckt sich eine erste Leitung 65, durch welche die vom Erhitzer 10 herkommenden Abgase zum Sauggebläse 13 strömen können. Diese Leitung 65 umfasst Röhren 66, deren Endpartien durch den Boden 61 und den Deckel 63 des Behälters 60 hindurchgehen, wobei sie im Boden 61 und im Deckel 63 flüssigkeitsdicht befestigt sind. Die Röhren 66 sind aus nicht korrodierendem Material und sie können aus Kunststoff, vorteilhaft aus Teflon, oder aus Glas sein. Die Röhren 66 sind vom Fluid im Behälter 60 umspüllt und sie stehen mit diesem in Wärmekontakt. Im dargestellten Beispiel verlaufen die Röhren 66 zwar geradlinig aber sie können auch einen zweckmässig gekrümmten Verlauf aufweisen.

Die von der Aussenseite des Bodens 61 abstehenden Abschnitte der Röhren 66 liegen in einem hohlen Eckstück 70, welches einen Vorraum zum Behälter 60 darstellt. Dieses Eckstück 70 schliesst sich in einem Randbereich des Behälterbodens 61 an die Unterseite desselben und es weist eine Oeffnung 71 auf, dessen Ebene praktisch senkrecht zur Ebene des Behälterbodens 61 steht. Diese Oeffnung 71 ist durch einen Flansch 72 begrenzt, so dass an diesem Eckstück jenes Anschlusstück 54 (Fig. 1) angeflanscht sein kann, welches zum Anschluss des zweiten Wärmetauschers 11 an die Abkühleinrichtung 12 dient. Dieses Verbindungsstück 54 kann ein Rohrstück sein, bei welchem die beiden Enden desselben mit je einem Flansch versehen sind.

In das Eckstück 70 mündet eine Düse 75, durch welche Frischwasser in den Innenraum des Eckstückes 70 eingesprüht werden kann. Diese Düse 75 geht durch eine der Wände des Eckstückes 70 hindurch und sie ist derart angeordnet, dass der Strom von Wassernebel gegen das vom Anschlusstück 54 ankommende Abgas gerichtet ist. Vorteilhaft ist die Düse 75 jedoch nicht nur gegen das ankommende Abgas sondern teilweise auch gegen die Mündungen der sich im Inneren des Eckstückes 70 befindlichen Endpartien der Röhren 66 gerichtet. Die Düse 75 ist somit schräg nach oben gerichtet. Um diese Lage der Düse 75 zu erreichen, ist diese in jener Wand 73 des Eckstückes 70 befestigt, welche der Eintrittsöffnung 71 gegenüberliegt und welche von der Unterseite des Bodens 61 praktisch rechtwinklig absteht. Im Bereich des Rauchgaseintrittes in den Rauchgaskanal 65 ist ein Magnetventil angeordnet, dessen Arbeitsweise durch das Steuergerät 5 gesteuert wird und welches seinerseits die Arbeitsweise der Düse 75, welche eine PVD F-Düse sein kann, steuert. Wenn das Rauchgas aus dem zweiten Wärmetauscher 11 eine Temperatur von mehr als 20 Grad Celsius hat, dann öffnet das Magnetventil die Düse 75 und gibt dadurch kaltes Wasser für Rauchgaswäsche frei. Bei Brennerstillstand wird das Ventil wieder geschlossen.

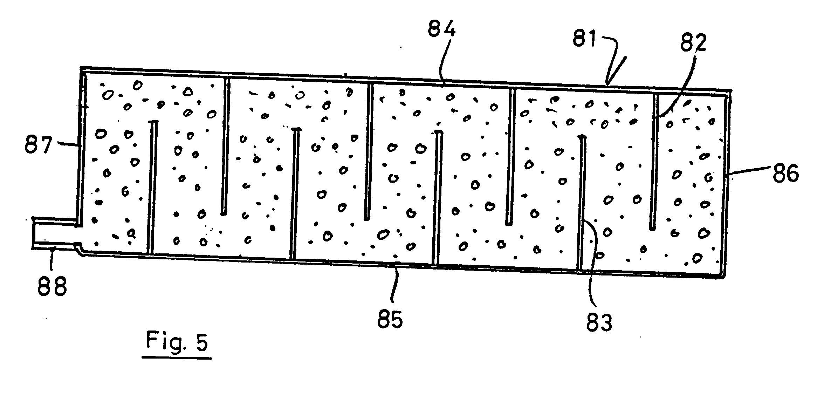

In der Unterseite 74 des Eckstückes 70 ist eine Oeffnung 76 ausgeführt, welche unter den Mündungen der Röhren 66 liegt. An die Aussenseite dieser Oeffnung 76 lässt sich eine Neutralisationsvorrichtung 80 (Fig. 1) anschliessen. Im Einzelnen wird diese Vorrichtung 80 im Zusammenhang mit Fig. 5 beschrieben werden.

Die oberen und über dem Behälterdeckel 63 liegenden Enden der Röhren 66 befinden sich in einer Kammer, deren Seitenwände durch ein kurzes Rohrstück 77 gebildet sind. An dieses Zwischenstück 77 ist ein Kniestück 78 angeflanscht, an den dann der Abgasabzug 14 angeschlossen ist. Diesem Kniestück 78 ist auch das Sauggebläse 13 zugeordnet, und zwar derart, dass der Propeller 79 desselben die Abgase aus den Röhren 66 ansaugt und an den Rauchabzug 14 abgibt. Die Arbeitsweise dieses Abluftventilators 13 wird durch das Steuergerät 5 gesteuert. Diese Steuerung ist so eingestellt, dass der Ventilator 13 etwa 50% mehr Frischluft dem Rauchgas zuführt. Nach einer Stillsetzung des Brenners 35 läuft der Abluftventilator 13 noch etwa 3 Sekunden weiter, damit das aggressive Rauchgas aus der Anlage abgesaugt wird und damit die Brennerkammer trocken bleibt. Vor einem Brennerstart läuft der Abluftventilator 13 etwa 3 Sekunden, um den gewünschten Unterdruck in der Brennkammer zur Vermeidung einer allfälligen Flammenexplosion zu gewährleisten.

Zwischen dem Boden 61 und dem Deckel 63 des Behälters 60 erstreckt sich auch eine zweite Leitung 90, durch welche Frischluft für den Brenner 35 mittles des Sauggebläses 13 angesaugt wird. Diese Leitung 65 umfasst Röhren 66, deren Endpartien durch den Boden 61 und den Deckel 63 des Behälters 60 hindurchgehen, wobei sie im Boden und im Deckel flüssigkeitsdicht befestigt sind. Die Röhren 66 sind aus einem nicht korrodierenden Material und sie können aus Kunststoff, vorteilhaft aus Teflon oder aus Glas sein. Die Röhren 66 sind vom Fluid im Behälter 60 umspüllt und sie stehen mit diesem in somit in Wärmekontakt. Im dargestellten Beispiel verlaufen die Röhren 66 zwar geradlinig aber sie können auch einen zweckmässig gekrümmten Verlauf aufweisen.

Die oberen und über dem Behälterdeckel 63 liegenden Enden der Röhren 66 der zweiten Leitung 90 befinden sich in einem anderen Kniestück 91, welches eine sich in die Umgebung der Anlage öffnenden Mündung 92 aufweist. Durch diese Mündung 92 gelangt die Umgebungsluft in die vorliegende Heizungsanlage. Die von der Aussenseite des Behälterbodens 61 abstehenden Abschnitte der Röhren 66 liegen in einem wannenförmigen bzw. tassenförmigen Hohlstück 95, welches auf der Unterseite des Behälterbodens 61 luftdicht befestigt ist. An dieses Hohlstück 95 schliesst sich eine Luftleitung 96 an, welche den zweiten Wärmetauscher 11 umgeht und direkt zum Zulaufstutzen 36 am Brenner 35 angeschlossen ist (Fig. 2). Somit ist der Erhitzer 10 der Abkühleinrichtung 12 frischluftmässig nachgeschaltet.

Im Behälter 60 befindet sich ein weiterer Wärmetauscher 100, dessen Grundkörper 101 als ein praktisch U-förmig verlaufendes Rohr, umgeben von einer gerippten Spirale, ausgeführt ist. Dieser Wärmetauscher 100 ist vorteilhaft aus Kupfer und der Grundkörper 101 samt der Spirale sind im Wärmeübertragungsmedium 64 eingetaucht. Die Anschlüsse 102 und 103 dieses Wärmetauschers 100 gehen durch den Deckel 63 des Behälters 60 hindurch und sie sind an den Frischwasserkreislauf (nicht dargestellt) des Hauses angeschlossen. Bei jeder Wasserentnahme wird somit das Glykolwasser 64 noch zusätzlich abgekühlt. Vorteilhaft ist der dritte Wärmetauscher 100 zwischen der Leitung 65 für die Abluft und der Leitung 90 für die Frischluft im Behälter 60 angeordnet.

Für grössere Kühlleistungen kann die Abkühleinrichtung 12 mit einem viereckigen Grundriss ausgeführt sein, wobei Fig. 4 in einem solchen Fall eine Seitenansicht einer solchen Einrichtung zeigt. Die Leitungen 65 und 90 umfassen in diesem Fall je zwei Reihe von Röhren 66, von welchen nur die ersten Röhren 66 der zwei Reihen in Fig. 4 dargestellt sind.

Die bereits erwähnte Neutralisationsvorrichtung 80 ist in Fig. 5 in Draufsicht dargestellt. Sie weist eine längliche Wanne 81 auf, in welcher sich zwei Gruppen von Querwänden 82 und 83 befinden. Die Wanne 81 selbst weist zwei Seitenwände 84 und 85 sowie zwei Stirnwände 86 und 87 auf. Die in Fig. 5 rechts liegende Endpartie der Wanne 81, welche die Stirnwand 86 umfasst, befindet sich unter der Bodenöffnung 76 im Eckstück 70 an der Abkühleinrichtung 12. Das Wasser, welches in den Abluftröhren 65 kondensiert, kann somit in diese Anfangspartie der Wanne 81 tropfen.

Die Länge der jeweiligen Querwand 82 bzw. 83 ist kleiner als die Länge der Stirnwände 86 bzw. 87 der Wanne 81. Die erste Gruppe der Querwände 82 ist einerends an der Innenseite der rechten Wannenseitenwand 84 befestigt. Die andere Gruppe der Querwände 83 ist einerendes an der Innenseite der gegenüberliegenden Seitenwand 85 befestigt. Die Querwände 82 und 83 der beiden Gruppen wechseln ab und die jeweils benachbarten Querwände 82 und 83 befinden sich in einem Abstand voneinander. Dieser Abstand ist vorteilhaft so gross wie der Abstand zwischen der freien Kante der jeweiligen Querwand 82 bzw. 83 und der gegenüberliegenden Seitenwand 85 bzw. 84 der Wanne 81. Das Wasser, welches in der Anfangspartie der Wanne 81 in diese gelangt, muss somit zwischen den benachbarten Querwänden slalomartig durchfliessen, wodurch der Weg von Wasser in der Wanne 81 verlängert wird. In der Wanne 81 befinden sich Stücke von Aktolit, welches die Verunreinigungen im Wasser neutralisiert. Das Wasser verlässt diese Vorrichtung 80 im Bereich eines Ausgusses 88 am Ende der Wanne 81 und es weist einen Ph-Wert von 7,0 auf, so dass diese Wasser gleich wie Regenwasser in die Kanalisation 89 abgeführt werden kann.

## Patentansprüche

1. Heizungsanlage mit Anschlüssen für einen Heizkreislauf, mit einem Erhitzer (10), welcher neben einer Brennvorrichtung (25) auch einen Wärmetauscher (30) aufweist, mit einer Einrichtung (12) zum Abkühlen der aus dem Erhitzer strömenden Abgase, mit einem Sauggebläse (13), welches dem Rauchabzug (14) der Heizungsanlage vorgeschaltet ist, und mit einem zweiten Wärmetauscher (11), welcher zwischen dem Erhitzer (10) und der Abkühleinrichtung (12) angeordnet ist, wobei dieser zweite Wärmetauscher (11) mittels Anschlusstücke (53,54) an den Erhitzer (10) einerseits und an die Abkühleinrichtung (12) andererseits angeschlossen ist, dadurch gekennzeichnet, dass der Erhitzer (10), der zweite Wärmetauscher (11) und die Abkühleinrichtung (12) als voneinander getrennte Einheiten ausgeführt sind, dass diese Bestandteile der Anlage mittels Verbindungsstücke (53,54) miteinander verbunden sind, dass der Erhitzer (10) und der zweite Wärmetauscher 11 im wesentlichen als längliche Gebilde ausgeführt sind, dass die Längsachsen dieser Gebilde praktisch horizontal verlaufen, dass der zweite Wärmetauscher (11) sich unter dem Erhitzer (10) befindet, dass die Abkühleinrichtung (12) sich hinter dem Erhitzer (10) und dem zweiten Wärmetauscher (11) befindet, dass die Abkühleinrichtung (12) einen Behälter (60) aufweist und dass die Höhe dieses Behälters (60) grösser ist als die horizontalen Abmessungen desselben.

2. Heizungsanlage nach Anspruch 1, dadurch gekennzeichnet, dass im Behälter (60) sich ein wärmeleitendes Fluid (64), vorteilhaft Glycol enthaltendes Wasser, befindet, das in diesem Behälter eine Leitung (65) untergebracht ist, durch welche die vom Erhitzer (10) herkommenden Abgase zum Sauggebläse (13) strömen können, dass diese Leitung (65) mit dem Fluid (64) in Wärmekontakt steht und dass sie aus einem nicht korrodierenden Material, wie z.B. aus Teflon oder Glas, ist.

3. Heizungsanlage nach Anspruch 2, dadurch gekennzeichnet, dass im Behälter (60) zumindest noch eine zweite Leitung (90) untergebracht ist, dass diese zweite Leitung (90) mit dem Fluid ebenfalls in Wärmekontakt steht, dass das eine Ende dieser Leitung (90) in die Umgebung der Heizungsanlage mündet und dass das andere Ende dieser Leitung unter Umgehung des zweiten Wärmetauschers (11) and den Brenne (35) im Erhitzer (10) angeschlossen ist.

4. Heizungsanlage nach Anspruch 2, dadurch gekennzeichnet, dass die Abgasleitung (65) zumindest ein Rohr (66) aufweist, dass dieses Rohr sich praktisch in vertikaler Richtung erstreckt, dass das untere Ende des Rohres (66) durch den Boden (61) des Behälters (60) flüssigkeitsdicht hindurchgeht und in ein zum zweiten Wärmetauscher (11) führendes Stück (70) mündet, dass das obere Ende des Rohres (66) durch einen Deckel (63) im Behälter (60) hindurchgeht und dass es in einen Kanal (78) mündet, in dem sich der Propeller (79) des Sauggebläses (13) befindet.

5. Heizungsanlage nach Anspruch 3, dadurch gekennzeichnet, dass die Leitung (90) für die Frischluftzufuhr zum Brenner (35) zumindest ein Rohr (66) aufweist, dass dieses Rohr sich praktisch in vertikaler Richtung erstreckt, dass das untere Ende dieses Rohres (66) durch den Boden (61) des Behälters (60) flüssigkeitsdicht hindurchgeht und an einen zum Brenner (35) führenden Kanal (95,96) angeschlossen ist und dass das obere Ende des Rohres (66) in die Umgebung des Behälters (60) mündet.

6. Heizungsanlage nach Anspruch 1, dadurch gekennzeichnet, dass der zweite Wärmetauscher (11) einen Wärmetauschkörper (41) für den Durchlass von zu erwärmendem Kesselrücklausfwasser enthält, dass der Einlass (42) dieses Körpers (41) an die Rücklaufleitung des Heizkreislaufes angeschlossen ist und dass der Auslass (43) des Wärmetauscherkörpers (41) an den Einlass (32) des Wärmetauschers (30) im Erhitzer (10) angeschlossen ist.

7. Heizungsanlage nach Anspruch 4, dadurch gekennzeichnet, dass in jener Partie (70) des den zweiten Wärmetauscher (11) mit der Abkühleinrichtung (12) verbindenden Kanals, welche sich unterhalb der unteren Mündung der Abgasleitung (65) befindet, eine Frischwasserdüse (75) angeordnet ist und dass der Boden (74) in dieser Partie des Verbindungsstückes eine Oeffnung (76) aufweist, unter der sich eine Neutralisationsvorrichtung (80) befindet.

8. Heizungsanlage nach Anspruch 1, dadurch gekennzeichnet, dass der Erhitzer (10) einen Behälter (21) aufweist, der zur Aufnahme von zu erhitzendem Wasser ausgeführt ist, dass in diesem Behälter (21) die Brennvorrichtung (25) flüssigkeitsdicht eingebaut ist, dass die Brennvorrichtung (25) einen etwa zylinderförmigen und vorteilhaft innen gerippten Mantel (27) aufweist, welcher mit der zu erhitzenden Flüssigkeit in Kontakt steht, dass die erste Endpartie des Mantels (27) mit Hilfe einer Platte (33) geschlossen ist, in welcher der Brenner (35) eingesetzt ist, dass in der gegenüberliegenden Endpartie des Mantels (27) eine Austrittsöffnung (29) für die Abgase ausgeführt ist und dass im Inneren des Mantels (27) sich ein etwa hülsenförmiger Flammentopf (37) befindet.

9. Heizungsanlage nach Anspruch 1, dadurch gekennzeichnet, dass sie eine Neutralisationsvorrichtung (80) aufweist, dass diese Vorrichtung eine längliche Wanne (81) enthält, in welcher sich zwei Gruppen von Querwänden (82, 83) befinden, dass die erste Gruppe der Querwände (82) einerends an der Innenseite einer der Wannenseitenwände (84) und die andere Gruppe der Querwände (83) einerendes an der Innenseite der gegenüberliegenden Seitenwand (85) befestigt ist, dass die Querwände (82,83) der beiden Gruppen miteinander abwechseln, dass die Anfangspartie der Wanne (81) sich unter der Abkühleinrichtung (12) befindet und dass die andere Endpartie der Wanne (81) mit einem Auslauf (88) versehen ist.

10. Heizungsanlage nach Anspruch 1, dadurch gekennzeichnet, dass im Behälter (60) der Abkühleinrichtung (12) sich ein weiterer Wärmetauscher (100) befindet, dass der Grundkörper (101) dieses Wärmetauschers als ein praktisch U-förmig verlaufendes Rohr ausgeführt ist, welches von einer gerippten Spirale umgeben sein kann, dass die Anschlüsse (102,103) des Wärmetauschers durch den Deckel (63) des Behälters (60) hindurchgehen und dass diese Anschlüsse an den Frischwasserkreislauf des zu beheizenden Hauses anschliessbar sind.

## Claims

1. Firing plant with connections for a heating circuit with a heater (10) which also has a burner device (25) and a heat exchanger (30), with a device (12) for cooling the flue gases emitted by the heater, with an extractor fan (13) which is triggered before the smoke outlet(14) of the firing plant and with a second heat exchanger (11) which is interposed between the heater (10) and the cooling device (12), wherein the second heater (10), the heat exchanger (11) and the cooling device (12) are constructed as separate units, wherein these component parts of the firing plant are connected together by means of fittings (53, 54), wherein the heater (10) and the heat exchanger (11) are essentially constructed as long structures, wherein the longitudinal axes of these structures run practically horizontally, wherein the second heater (11) is situated underneath the heater (10), wherein the cooling device (12) is situated behind the heater (10) and the second heat exchanger (11), wherein the cooling device (12) has a vessel or container (60) and wherein the height of this vessel or container (60) is greater than the horizontal measurement of this same vessel or container (60).

2. Firing plant as claimed in claim 1, wherein there is a heat conducting fluid (64) in the vessel or container (60), advantageously being water containing glycol, wherein there is a duct (65) in this vessel through which the flue gases emitted by the heater (10) can flow to the extractor fan (13), wherein this duct (65) is in thermal contact with the fluid (64) and wherein it is made of a non-corroding material such as Teflon or glass.

3. Firing plant as claimed in claim 2, wherein the vessel (60) contains at least one more duct (90), wherein this second duct is also in thermal contact with the fluid, wherein the one end of this duct (90) leads to the proximity of the firing plant and wherein the other end of the said duct is connected to the burner (35) in the heater (10) while by-passing the second heat exchanger (11).

4. Firing plan as claimed in claim 2, wherein the flue gas duct (65) has at least one tube (66), wherein this tube stands in a virtually vertical direction, wherein the lower end of the tube (66) goes through the bottom (61) of the vessel (60) which remains watertight, and ends in a section (70) leading to the second heat exchanger (11), wherein the upper end of the tube (66) goes through a lid (63) in the vessel (60) and wherein this ends in a channel (78) in which the propeller (79) of the extractor fan (13) is located.

5. Firing plant as claimed in claim 3, wherein the duct (90) bringing fresh air to the burner (35) has at least one tube (66), wherein this tube stands in a virtually vertical direction, wherein the lower end of this tube (66) goes through the bottom (61) of the vessel (60) which remains watertight and is connected to a channel (95, 96) leading to the burner (35) and wherein the upper end of the tube (66) ends in the proximity of the vessel or container (60).

6. Firing plant as claimed in claim 1, wherein the second heat exchanger (11) contains a heat exchanger body (41) allowing the passage of return water from the boiler to be heated, wherein the inlet (42) of this body (41) is connected to the return line of the heating circuit and wherein the outlet (43) of the heat exchanger body (41) is connected to the inlet (32) of the heat exchanger (30) in the heater (10).

7. Firing plant as claimed in claim 4, wherein in that part (70) of the channel linking the second heat exchanger (11) with the cooling device (12) which is located beneath the lower end of the flue gas duct (65), there is a fresh water jet (75) and wherein the bottom (74) of this part of the connecting section has an opening (76) underneath which there is a neutralizing device (80).

8. Firing plant as claimed in claim 1, wherein the heater (10) has a vessel or container (21) which is designed to collect the water to be heated, wherein in this container (21) the burner device (25) is integrated with waterproof joints, wherein the burner device (25) has a somewhat cylindrical jacket (27), advantageously ribbed on the inside, which is in contact with the fluid to be heated, wherein the first end section of the jacket (27) is closed by means of a plate (33) in which the burner (35) is inserted, wherein there is an outlet opening (29) for the flue gases in the opposite end section of the jacket (27) and wherein inside the jacket (27) there is a somewhat pod-shaped flame pot (37) .

9. Firing plant as claimed in claim 1 wherein the plant has a neutralizing device (80), wherein the said neutralizing device comprises a longitudinal trough (81), in which there are two groups of transverse walls (82, 83), wherein the first group of transverse walls (82) is fixed at one end to the inside of one of the side walls of the trough (84) and the other group of transverse walls (83) is fixed at one end to the inside of the opposite side wall (85), wherein the transverse walls (82, 83) of the two groups alternate, wherein the initial section of the trough (81) is located underneath the cooling device (12) and wherein the other end section of the trough (81) is equipped with an outlet (88).

10. Firing plant as claimed in claim 1, wherein there is a further heat exchanger (100) in the container (60) of the cooling device (12), wherein the basic shell (101) of this heat exchanger is constructed as a practically U-shaped tube which can be surrounded by a ribbed spiral, wherein the connections (102, 103) of the heat exchanger go through the lid (63) of the container (60) and wherein these connections can be attached to the fresh water circuit of the house to be heated.

## Revendications

1. Installation de chauffe dotée d'accouplements permettant de la raccorder à un circuit de chauffage, comprenant un corps de chauffe (10) comportant un dispositif de combustion (25) et un échangeur de chaleur (30), dotée d'un dispositif (12) pour le refroidissement des gaz de fumée issus du corps de chauffe, d'un ventilateur extracteur (13) placé en amont du conduit d'évacuation de fumée (14) de l'installation de chauffe, d'un second échangeur de chaleur (11) intercalé entre le corps de chauffe (10) et le dispositif de refroidissement (12) et relié par des pièces de jonction (53, 54) au corps de chauffe (10) d'une part et au refroidisseur (12) d'autre part, caractérisée en ce que le corps de chauffe (10), l'échangeur de chaleur (11) et le dispositif de refroidissement (12) sont conçus comme des éléments distincts reliés entre eux par des pièces de jonction (53, 54), en ce que le corps de chauffe (10) et l'échangeur de chaleur (11) sont essentiellement de construction oblongue, en ce que les axes longitudinaux de ces constructions sont presque horizontaux, en ce que le second échangeur de chaleur (11) est placé sous le corps de chauffe (10), en ce que le dispositif de refroidissement (12) est placé derrière le corps de chauffe (10) et le second échangeur de chaleur (11), en ce que le dispositif de refroidissement (12) est pourvu d'un réservoir (60) et en ce que la hauteur de ce réservoir est supérieure à sa dimension horizontale.

2. Installation de chauffe selon la revendication 1, caractérisée en ce que le réservoir (60) contient un fluide thermoconducteur, avantageusement un mélange d'eau et de glycol, en ce qu'une conduite (65) est logée dans ce réservoir, dans laquelle les gaz de fumée en provenance du corps de chauffe (10) peuvent circuler vers le ventilateur extracteur, en ce que cette conduite (65) est en contact thermique avec le fluide (64) et en ce qu'elle est réalisée dans un matériau résistant à la corrosion comme le Teflon ou le verre par exemple.

3. Installation de chauffe selon la revendication 2, caractérisée en ce qu'une seconde conduite (90) est logée dans le réservoir (60), en ce que cette conduite (90) est également en contact thermique avec le fluide, en ce qu'une extrémité de cette conduite (90) débouche à proximité de l'installation de chauffe et en ce que la seconde extrémité est reliée au brûleur (35) dans le corps de chauffe (10), après contournement du second échangeur de chaleur (11).

4. Installation de chauffe selon la revendication 2, caractérisée en ce que la conduite d'évacuation des gaz de fumée comporte au moins un tube (66), en ce que le cheminement de ce tube est presque vertical, en ce que l'extrémité inférieure de ce tube (66) traverse le fond (61) du réservoir (60) de manière étanche et qu'elle débouche dans une pièce (70) menant vers le second échangeur de chaleur (11), en ce que l'extrémité supérieure du tube (66) traverse un couvercle (63) dans le réservoir (60) et qu'elle débouche dans un conduit (78) dans lequel se trouve l'hélice (79) du ventilateur extracteur (13).

5. Installation de chauffe selon la revendication 3, caractérisée en ce que la conduite (90) d'amenée d'air frais au brûleur (35) comporte au moins un tube (66), en ce que le cheminement de ce tube est presque vertical, en ce que l'extrémité inférieure de ce tube (66) traverse le fond (61) du réservoir (60) de manière étanche et qu'elle est reliée à un conduit (95, 96) menant au brûleur (35), en ce que l'extrémité supérieure du tube (66) débouche à proximité du réservoir (60).

6. Installation de chauffe selon la revendication 1, caractérisée en ce que le second échangeur de chaleur (11) contient un corps d'échange thermique (41) pour le passage d'eau de retour de chaudière à réchauffer, en ce que l'entrée (42) de ce corps (41) est raccordée à la conduite de retour du circuit de chauffage, et en ce que la sortie (43) du corps (41) est reliée à l'entrée (32) de l'échangeur de chaleur (30) dans le corps de chauffe (10).

7. Installation de chauffe selon la revendication 4, caractérisée en ce qu'une buse d'eau fraîche (75) est placée dans la section (70) du conduit qui relie le second échangeur de chaleur (11) au dispositif de refroidissement (12) et qui se trouve sous l'orifice inférieur du conduit d'évacuation des gaz de fumée (65), en ce que le fond (74) de cette section de la pièce de jonction présente une ouverture (76) sous laquelle se trouve un dispositif de neutralisation (80).

8. Installation de chauffe selon la revendication 1, caractérisée en ce que le corps de chauffe (10) est doté d'un réservoir (21) destiné à recevoir l'eau à chauffer, en ce que le dispositif de combustion (25) est monté dans ce réservoir (21) de manière étanche, en ce que le dispositif de combustion (25) comporte une enveloppe presque cylindrique (27) dont la face interne est judicieusement nervurée et qui est en contact avec le liquide à chauffer, en ce qu'une extrémité de l'enveloppe (27) est obturée par une plaque (33) sur laquelle est monté le brûleur (35), en ce que l'extrémité opposée de l'enveloppe (27) est pourvue d'un orifice (29) d'évacuation des gaz de fumée et en ce qu'à l'intérieur de l'enveloppe (27) se trouve une pointe de flamme (37) ayant approximativement la forme d'une douille.

9. Installation de chauffe selon la revendication 1, caractérisée en ce qu'elle est dotée d'un dispositif de neutralisation (80), en ce que ce dispositif contient une cuve longitudinale (81) dans laquelle se trouvent deux séries de cloisons transversales (82, 83), en ce que la première série de cloisons transversales (82) est fixée a la face interne d'une des parois latérales de la cuve (84) et en ce que l'autre série de cloisons transversales (83) est fixée à la paroi opposée (85), en ce que les cloisons transversales (82, 83) des deux séries alternent, en ce que la partie antérieure de la cuve (81) se trouve sous le dispositif de refroidissement (12) et en ce que la partie postérieure de la cuve (81) est pourvue d'une sortie (88).

10. Installation de chauffe selon la revendication 1, caractérisée en ce que le réservoir (60) du dispositif de refroidissement (12) contient un échangeur de chaleur (100) supplémentaire, en ce que le corps de base (101) de cet échangeur de chaleur est un tube disposé presque en U qui peut être entouré de spires nervurées, en ce que les raccords (102, 103) de l'échangeur de chaleur traversent le couvercle (63) du réservoir (60) et en ce que ces raccords peuvent être reliés au circuit d'eau fraîche de la maison à chauffer.
